(19) Europäisches Patentamt
European Patent Office
Office européen des brevets

(11) **EP 4 292 083 B1**

(12) **EUROPEAN PATENT SPECIFICATION**

(45) Date of publication and mention
of the grant of the patent:
**13.08.2025 Bulletin 2025/33**

(21) Application number: **22709992.6**

(22) Date of filing: **15.02.2022**

(51) International Patent Classification (IPC):
*G10L 15/18* (2013.01)     *G06F 40/284* (2020.01)
*G10L 15/187* (2013.01)     *G10L 15/19* (2013.01)

(52) Cooperative Patent Classification (CPC):
**G10L 15/18; G06F 40/284;** G10L 15/187;
G10L 15/19

(86) International application number:
**PCT/EP2022/053596**

(87) International publication number:
**WO 2022/171886 (18.08.2022 Gazette 2022/33)**

(54) **METHOD, DEVICE, COMPUTER PROGRAM AND COMPUTER READABLE STORAGE MEDIUM FOR DETERMINING A COMMAND**

VERFAHREN, VORRICHTUNG, COMPUTERPROGRAMM UND COMPUTERLESBARES SPEICHERMEDIUM ZUR BESTIMMUNG EINES BEFEHLS

PROCÉDÉ, DISPOSITIF, PROGRAMME INFORMATIQUE ET SUPPORT D'INFORMATIONS LISIBLE PAR ORDINATEUR DESTINÉS À DÉTERMINER UNE COMMANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.02.2021 GB 202102117**

(43) Date of publication of application:
**20.12.2023 Bulletin 2023/51**

(73) Proprietor: **Eaton Intelligent Power Limited Dublin 4 (IE)**

(72) Inventor: **JINDRICH, Sindelár**
**37809 Nova Ves nad Luznici 109 (CZ)**

(74) Representative: **Seymour-Pierce, Alexandra Isobel**
**Venner Shipley LLP**
**200 Aldersgate**
**London EC1A 4HD (GB)**

(56) References cited:
**US-A- 6 016 470       US-A1- 2001 053 974**
**US-A1- 2004 054 533       US-A1- 2009 112 593**

**Description**

A method for determining a command is provided. In addition, a device, a computer program and a computer readable storage medium are provided.

Speech recognition is a technology which is frequently used in commercial products. The trend moves into the industrial environment. But while consumer products often delegate the processing of speech into a cloud, devices, in particular industrial devices, need to perform the processing locally and offline, as an internet connection is often not available and an industrial environment requires high cyber security levels.

Document US 2009/112593 A1 describes a system for recognizing speech for searching a database. The system receives speech input as a spoken search request and then processes the speech input in a speech recognition step using a vocabulary for recognizing the spoken request. By processing the speech input words recognized in the speech input and included in the vocabulary are obtained to form at least one hypothesis.

Document US 6 016 470 A describes a method for processing speech recognition including a system for generating a first probability of the word or sequence that words in a speech utterance is rejectable and a second probability that the word or sequence of words in the utterance is acceptable.

Document US 2001/053974 A1 describes that in order to prevent degradation of speech recognition accuracy due to an unknown word, a dictionary database has stored therein a word dictionary in which are stored, in addition to words for the objects of speech recognition, suffixes, which are sound elements and a sound element sequence, which form the unknown word, for classifying the unknown word by the part of speech thereof.

Document US 2004/054533 A1 describes an unsupervised datadriven pronunciation modelling, wherein a pronunciation for an input word is modeled by generating a set of candidate phoneme strings having pronunciations close to the input word in an orthographic space. Phoneme sub-strings in the set are selected as the pronunciation.

An object to be solved is to specify a particularly fast method for determining a command. Furthermore, a device and a computer program, which are able to perform such a method, are specified. In addition, a computer readable storage medium with such a computer program is specified.

The object is solved by the subject-matter of the independent claims. Advantageous embodiments, implementations and further developments are the subject-matter of the respective dependent claims.

A method for determining a command is provided. A device performs an action dependent on the command. In particular, the command is representative for the action.

The device is, for example, an embedded device comprising a combination of a computer processor, a computer memory and an output peripheral device. For example, the embedded device has a dedicated function within a mechanical and/or electrical system. The mechanical and/or electrical system can be controlled by the action. For example, the device is an offline device. In this case, the device is not connected to a network, in particular to the internet.

For example, the device is configured to execute the method to transform an acoustic signal, i.e. a voice signal of a user of the device, to the command.

According to the method, a set of pseudo words is provided, wherein each pseudo word of the set of pseudo words is representative for more than one real word of a set of real words, which is provided for a pronunciation model. For example, the pronunciation model maps phonemes to graphemes as described in more detail below.

Exemplarily, in order to provide the set of pseudo words, a particularly large set of real words is provided. "Particularly large" means here that at least 10, at least 1000, in particular at least 3000, real words are comprised by the set of real words. The set of pseudo words is exemplary generated dependent on the set of real words, wherein each pseudo word of the set of pseudo words is phonetically close to the real words, but the pseudo words are not the real words themselves. In other words, the set of pseudo words represents a phonetic approximation of the set of real words. This is to say that each pseudo word of the set of pseudo words sounds like several real words of the set of real words and at the same time is not any real word.

According to the method, an acoustic signal is mapped to phonemes by an acoustic model. For example, the acoustic signal is recorded and transcribed to phonemes by the acoustic model. The acoustic signal is, for example, the voice signal.

According to the method, at least one output word is determined dependent on the phonemes and the pronunciation model. For example, the output word is representative for the acoustic signal.

For example, the phonemes are mapped to graphemes by the pronunciation model. For example, a grapheme is a smallest meaning-distinguishing unit in a writing system that represents a phoneme or phoneme sequence, i.e. a letter. A phoneme is representative, for example, for how the grapheme is pronounced. For example, a phoneme is representative for one grapheme or more than one graphemes.

According to the method, the command is determined dependent on the at least one output word, the set of pseudo words and a set of command words, wherein a device performs an action dependent on the command. In particular, the command words are different to the real words and/or different to the pseudo words.

For example, speech recognition methods work with a finite state grammar and a limited vocabulary. One of the technical challenges is the ability to successfully recognize a valid command from an invalid command, i.e. a command being out-of-grammar.

For example, the determination of the command includes a query, wherein the output word is compared to the set of pseudo words. Exemplarily, if the command comprises any of the set of pseudo words, the command is invalid. However, if the command comprises only an output word being represented by the set of command words, the command is valid.

An idea of the method described herein is, inter alia, to provide a set of pseudo words and determine the command based on the set of pseudo words and the command words. Therefore, the method is configured to recognize and reject an invalid output phrase, comprising at least one pseudo word of the set of pseudo words. This is important for speech recognition systems in the industrial segment. An incorrectly recognized command can cause efficiency losses during operation, such as starting an unwanted action and/or cause injury or equipment damage hazard. When the invalidation of input, i.e. the acoustic signal, is missing, speech recognition system tries to associate any sentence to a supported command. This causes false detection of commands with hazards mentioned above.

Since each pseudo word of the set of pseudo words is representative for more than one real word of a set of real words, the set of pseudo words is comparably small and thus the method can be advantageously carried out particularly fast, and thus adding this set of pseudo words to the pronunciation and/or a language model does not make these models dramatically larger, allowing the method to be carried out particularly fast.

According to at least one embodiment of the method, a language model is provided dependent on the set of pseudo words. For example, the language model determines a likelihood of a word to be determined as an output word in an output phrase depended on a sequence of output words in a given context based on a grammar.

The acoustic model is implemented, for example, within a statistical Markov model, e.g. a Hidden-Markov-Model. The grammar used is exemplarily defined in a JSpeech Grammar Format, JSGF for short.

According to at least one embodiment of the method, at least one output phrase is generated dependent on the at least one output word by the language model. This is to say that the determined output words are fed to the language model. Within the language model the output phrase is generated dependent on the output words using the grammar comprising the set of pseudo words and the set of command words.

For example, the command is determined dependent on the at least one output phrase, the set of pseudo words and the set of command words, wherein dependent on the command a device performs an action.

According to at least one embodiment of the method, the provision of the set of pseudo words comprises a provision of the set of real words. Further, the pronunciation model comprises a determination of the set of pseudo words dependent on the set of real words, wherein the set of pseudo words is smaller than the set of real words. Since the set of pseudo words is smaller than the set of real words, the method can be carried out particularly fast.

According to at least one embodiment of the method, each real word of the set of real words is not equal to any of the pseudo words of the set of pseudo words.

According to at least one embodiment of the method, the language model is dependent on a grammar. For example, the grammar is a preset grammar. This is to say that the grammar is a finite state grammar because the grammar only comprises a specific set of words, sentences and/or phrases.

According to at least one embodiment of the method, the grammar is dependent on the set of pseudo words and the set of command words. Thus, the determination of the output phrase can also lead to an output phrase comprising an output word of the set of pseudo words. Advantageously, having such a grammar, the output phrase can be discriminated, if the output phrase comprises one or more of the pseudo words of the set of pseudo words.

Exemplarily, the command words have a weight equal to the pseudo words of the set of pseudo words.

According to at least one embodiment of the method, at least some of the pseudo words of the set of pseudo words comprised in the grammar have a weight bigger than any of the command words of the set of command words. For example, the weight of the set of pseudo words is 10 times higher, in particular 100 times higher, than the command words of the set of command words. This is to say that the likelihood of determining a pseudo word by the language model is more likely than determining a command word. Such a method is advantageously particularly safe.

According to at least one embodiment of the method, the set of pseudo words is determined by a statistical method comprising the transcription of the set of real words to phonemes.

The statistical method used for the determination of the set of pseudo words can comprise any statistical method being useful to determine the set of pseudo words being smaller than a set of real words.

According to at least one embodiment of the method, the statistical method comprises a selection of some of the phonemes of the set of real words.

According to at least one embodiment of the method, the statistical method comprises a determination of the set of pseudo words dependent on the selection.

According to at least one embodiment of the method, the command is discarded if the at least one output word is one of the pseudo words of the set of pseudo words. Exemplary, the command is discarded if the at least one output phrase comprises one of the pseudo words of the set of pseudo words. This is to say that if the command is discarded since the one output phrase comprises a pseudo word of the set of pseudo words, the device does not perform any action based on this command. Advantageously, due to such a method, the device can be operated particularly safe.

Furthermore, a device for determining a command is specified. The device is configured to perform the method described herein. Therefore, all features and embodiments disclosed in connection with the method are also disclosed in connection with the device and vice versa.

In addition a computer program is specified comprising instruction which, when the computer program is executed by a computer, causes the computer program to execute the method described herein.

Further, a computer readable storage medium is specified on which the computer program described herein is stored.

Exemplary embodiments of the method are explained in more detail below with reference to the figures.

Figure 1 shows a flowchart of the method for determining a command according to an exemplary embodiment, and

Figure 2 shows a flowchart of a determination of a set of pseudo words for a method according to an exemplary embodiment.

Figures 3, 4, 5, 6 and 7 show matrices for composing a pseudo word.

Elements of the same structure or function are marked with the same reference signs across all figures.

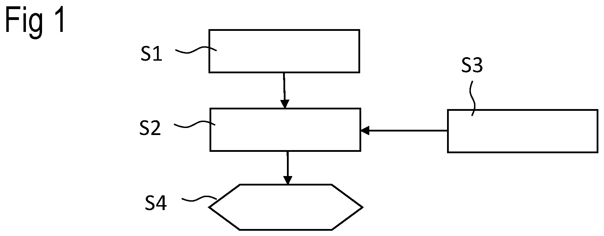

Step S1 according to Figure 1 comprises a mapping of an acoustic signal to phonemes by an acoustic model. The acoustic signal is exemplarily a voice signal of a user of a device, on which the method is carried out.

Subsequently, in step S2, at least one output word is determined dependent on the phonemes and a pronunciation model. The pronunciation model is dependent on a set of pseudo words.

The set of pseudo words is provided in a separate step S3, wherein each pseudo word of the set of pseudo words is representative for more than one real word of a set of real words. The provision of the set of pseudo words can be carried out before all other method steps. For example, the set of real words is a list of most common words of a given language.

After the output word is determined, the method comprises a step S4, wherein a command is determined dependent on the at least one output word, the set of pseudo words and a set of command words. Dependent on the command the device performs an action.

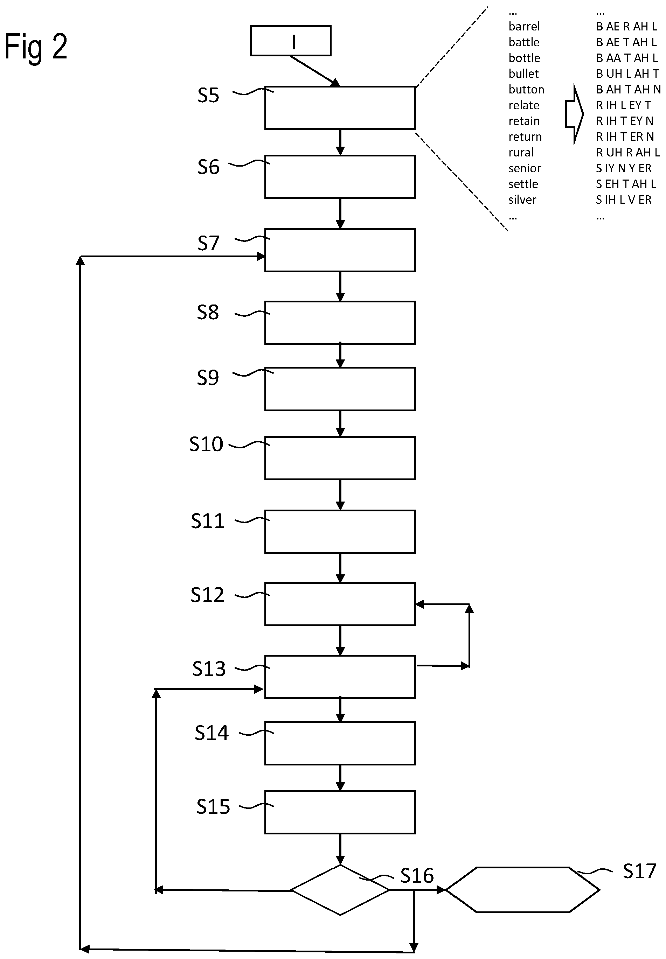

The flow chart according to Figure 2 comprises, in order to determine a set of pseudo words, a step S5, in which a set of real words, being an input I, is phonetically transcribed. During the phonetical transcription, each real word of the set of real words is transformed into its phonemes. This is to say that each real word is transformed to one sequence of phonemes. This is schematically shown on the right hand side next to step S5.

Subsequently, in step S6 the phonetical transcription of the set of real words is split into N groups, wherein each group has the same length, i.e. each sequence of phonemes comprise the same amount of phonemes. This is to say that the phonetical transcription is grouped by a count of the phonemes.

In step 7, one of the groups of the N groups is selected. Subsequently, in step 8 phonetic paths are calculated dependent on the phonemes of the group. The phonetic paths comprise vowel paths and consonant paths.

Further, in step 9, word structures are calculated dependent on the phonemes of the group. The word structure is characteristic for a pattern in which vowels and consonants alternate.

In step 10, at least two parameters U and V are calculated. The parameter U is characteristic for most frequent word structures. The parameter V is characteristic for most frequent consonants and vowels. In other words, the parameter V is characteristic for how many phonetic paths are used together with a single word structure, for vowels and consonants respectively.

Step 11 is divided in three substeps, wherein in a first substep, the top U words structures are acquired. In a second substep, the top V consonant paths are acquired and in a third substep, the top V vowel paths are acquired.

Within steps 12, 13 and 14 a pseudo word is composed dependent on the parameters U and V. In step 15, the composed pseudo word is added to the set of pseudo words. These steps are repeated dependent on the parameters U and V, see step 16.

Further, steps 6 to 16 are repeated for all groups N. Finally, in step 17, the set of pseudo words is completed.

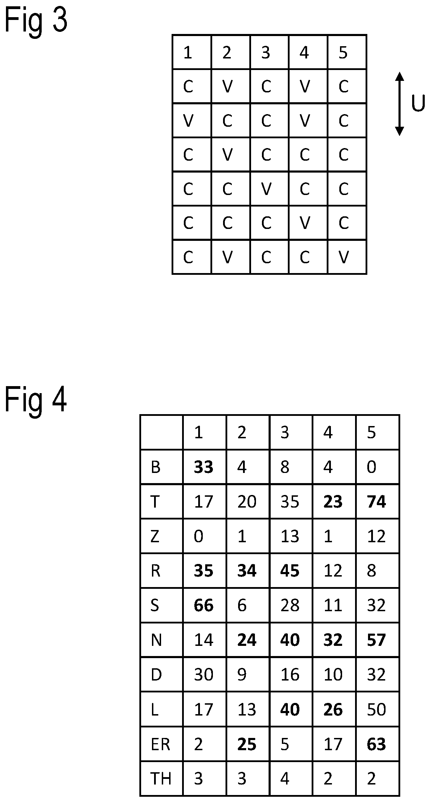

Within steps 8 to 9, the phonemes of the group are filled in matrices according to Figures 3, 4 and 5.

The matrix shown in Figure 3 is representative for a word structure represented by vowels V and consonants C, wherein the rows are ordered from the most frequently occurring word structure to the least frequently occurring word structure. Here, the length of the group is 5, such that all the real words in the group have a phonetic length of 5. For example, the letter C is representative for a consonant and the letter V is representative for a vowel. This is to say this matrix shows patterns, in which vowels and consonants alternate for each real word of the set of real words.

The matrix shown in Figure 4 is representative for consonant paths of the transcribed phonemes of the group. For example, each element of the matrix counts how often a consonant appears at a specific position.

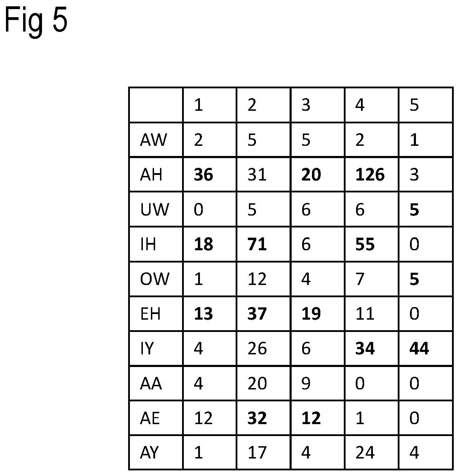

The matrix shown in Figure 5 is representative for vowel paths of the transcribed phonemes of the group. For example, each element of the matrix counts how often a vowel appears at a specific position.

For example, the parameter U is calculated to be 2 and the parameter V is calculated to be 3. This is to say that U=2 word structures are provided and the V=3 most frequent consonants and vowels.

Exemplarily, the parameters U and V are calculated by the formulas:

```
U = ceil(output group size / words per structure
```

V = words per structure, wherein output group size = ceil(output word count * (input group size / input word count))

"output word count" is representative for how many pseudo words, in total, are desired. The real count of pseudo words on the output can be slightly higher than this number - this is caused by the ceil() operations in the calculations.

"output group size" is representative for how many pseudo words shall be generated for a given group of real words. Exemplary, for N = 5, it means "how many psuedo words shall be generated from the group of real words of phoneme length 5".

"input group size" is representative for how many real words are in the group N. Exemplary, for N = 5, it means "how many input real words with the phoneme length of 5 are comprised".

"input word count" is representative for the total size of the input real world set, for example 3000.

"output group size" is representative for the output pseudo word set, the equivalent of what "input group size" is for the input real word set. Exemplary, the sum of input group size for all groups of input real words is equal to the input word count. The sum of output group size for all groups shall be equal (or larger - due to the ceil()) to the output word count.

The formulas, for example, ensure that the ratio of the phoneme lengths in the pseudo word set is the same as the ratio of phoneme lengths in the input real word set. I.e. if the most frequent phoneme length in the input real word set is 5 and the least frequent phoneme length is 13, then in the output pseudo word set, the most frequent phoneme length is 5, and the least frequent is 13.

Within steps 14 and 15, the pseudo words are composed dependent on the matrices of Figures 3 to 5.

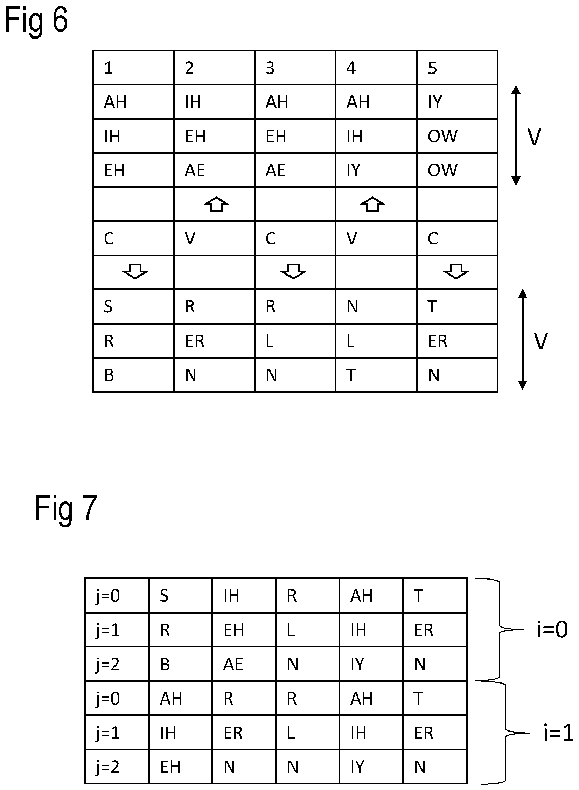

In Figure 6, the V=3 most frequent vowels and the V=3 most frequent consonants are listed. Further, the first word structure of the U=2 word structures is shown.

In Figure 7, the V=3 most frequent vowels and the V=3 most frequent consonants, i.e. j=0, j=1 and j=2, are composed to a pseudo word according to the U=2 word structures, i=0 and i=1.

Reference signs list

I input
S1...S17 steps

**Claims**

1. Method for determining a command, comprising

   - providing (S4) a set of pseudo words, wherein each pseudo word of the set of pseudo words is representative for more than one real word of a set of real words, which is provided for a pronunciation model,
   - mapping (S1) an acoustic signal to phonemes by an acoustic model,
   - determining (S2) at least one output word dependent on the phonemes and the pronunciation model, and
   - determining (S5) the command dependent on the at least one output word, the set of pseudo words and a set of command words, wherein dependent on the command a device performs an action.

**2.** Method according to the preceding claim, wherein mapping the phonemes to at least one output phrase comprises

- providing a language model dependent on the set of pseudo words, - generating at least one output phrase dependent on the at least one output word by the language model.

**3.** Method according to one of the preceding claims, wherein the provision of the set of pseudo words comprises

- providing the set of real words,
- determining the set of pseudo words dependent on the set of real words, wherein the set of pseudo words is smaller than the set of real words.

**4.** Method according to one of the preceding claims, wherein each real word of the set of real words is not equal to any of the pseudo words of the set of pseudo words.

**5.** Method according to claim 2 or one of the claims 3 or 4 as far as they are at least indirectly dependent on claim 2, wherein

- the language model is dependent on a grammar,
- the grammar is dependent on the set of pseudo words and the set of command words, and
- at least some of the pseudo words of the set of pseudo words comprised in the grammar have a weight bigger than any of the command words of the set of command words.

**6.** Method according to one of the preceding claims, wherein the set of pseudo words is determined by a statistical method comprising

- transcribing the set of real words into phonemes,
- selecting some of the phonemes of the set of real words, and
- determining the set of pseudo words dependent on the selection.

**7.** Method according to one of the preceding claims, wherein the command is discarded if the at least one output word is one of the pseudo words of the set of pseudo words.

**8.** Device for determining a command, wherein the device is configured to perform the method according to one of the preceding claims.

**9.** Computer program comprising instructions which, when the computer program is executed by a computer, cause the computer program to execute the method according to one of the claims 1 to 7.

**10.** Computer-readable storage medium on which the computer program according to claim 9 is stored.


**Patentansprüche**

**1.** Verfahren zur Bestimmung eines Befehls, umfassend

- Bereitstellen (S4) eines Satzes von Pseudowörtern, wobei jedes Pseudowort des Satzes von Pseudowörtern repräsentativ für mehr als ein reales Wort eines Satzes von realen Wörtern ist, der für ein Aussprachemodell bereitgestellt wird,
- Abbilden (S1) eines akustischen Signals auf Phoneme durch ein akustisches Modell,
- Bestimmen (S2) mindestens eines Ausgabewortes in Abhängigkeit von den Phonemen und dem Aussprachemodell, und
- Bestimmen (S5) des Befehls in Abhängigkeit von dem mindestens einen Ausgabewort, dem Satz von Pseudowörtern und einem Satz von Befehlswörtern, wobei eine Vorrichtung in Abhängigkeit von dem Befehl eine Aktion ausführt.

**2.** Verfahren nach dem vorhergehenden Anspruch, wobei das Abbilden der Phoneme auf mindestens eine Ausgabephrase Folgendes umfasst

- Bereitstellen eines Sprachmodells in Abhängigkeit des Satzes von Pseudowörtern,
- Erzeugen mindestens einer Ausgabephrase in Abhängigkeit von dem mindestens einen Ausgabewort durch das Sprachmodell.

3. Verfahren nach einem der vorhergehenden Ansprüche, wobei das Bereitstellen des Satzes von Pseudowörtern Folgendes umfasst

   - Bereitstellen des Satzes von realen Wörtern,
   - Bestimmen des Satzes von Pseudowörtern in Abhängigkeit von dem Satz von realen Wörtern, wobei der Satz von Pseudowörtern kleiner ist als der Satz von realen Wörtern.

4. Verfahren nach einem der vorhergehenden Ansprüche, wobei jedes reale Wort des Satzes von realen Wörtern nicht gleich einem der Pseudowörter des Satzes von Pseudowörtern ist.

5. Verfahren nach Anspruch 2 oder einem der Ansprüche 3 oder 4, soweit sie mindestens mittelbar von Anspruch 2 abhängig sind, wobei

   - das Sprachmodell von einer Grammatik abhängig ist,
   - die Grammatik von dem Satz von Pseudowörtern und dem Satz von Befehlswörtern abhängig ist, und
   - mindestens einige der Pseudowörter des Satzes von Pseudowörtern, die in der Grammatik umfasst sind, ein größeres Gewicht haben als irgendeines der Befehlswörter des Satzes von Befehlswörtern.

6. Verfahren nach einem der vorhergehenden Ansprüche, wobei der Satz von Pseudowörtern durch ein statistisches Verfahren bestimmt wird, das Folgendes umfasst

   - Umschreiben des Satzes von realen Wörtern in Phoneme,
   - Auswählen einiger der Phoneme aus dem Satz von realen Wörtern, und
   - Bestimmen des Satzes von Pseudowörtern in Abhängigkeit von der Auswahl.

7. Verfahren nach einem der vorhergehenden Ansprüche, wobei der Befehl verworfen wird, wenn das mindestens eine Ausgabewort eines der Pseudowörter aus dem Satz von Pseudowörtern ist.

8. Vorrichtung zum Bestimmen eines Befehls, wobei die Vorrichtung konfiguriert ist, das Verfahren nach einem der vorhergehenden Ansprüche auszuführen.

9. Computerprogramm mit Anweisungen, die bei Ausführung des Computerprogramms durch einen Computer das Computerprogramm veranlassen, das Verfahren nach einem der Ansprüche 1 bis 7 auszuführen.

10. Computerlesbares Speichermedium, auf dem das Computerprogramm nach Anspruch 9 gespeichert ist.


**Revendications**

1. Procédé de détermination d'une commande, comprenant

   - la fourniture (S4) d'un ensemble de pseudo-mots, dans lequel chaque pseudo-mot de l'ensemble de pseudo-mots est représentatif de plus d'un mot réel d'un ensemble de mots réels, qui est fourni pour un modèle de prononciation,
   - la mise en correspondance (S1) d'un signal acoustique avec des phonèmes par un modèle acoustique,
   - la détermination (S2) d'au moins un mot de sortie en fonction des phonèmes et du modèle de prononciation, et
   - la détermination (S5) de la commande en fonction de l'au moins un mot de sortie, de l'ensemble de pseudo-mots et d'un ensemble de mots de commande, dans lequel un dispositif effectue une action en fonction de la commande.

2. Procédé selon la revendication précédente, dans lequel la mise en correspondance des phonèmes avec au moins une phrase de sortie comprend

   - la fourniture d'un modèle de langage en fonction de l'ensemble de pseudo-mots,

EP 4 292 083 B1

- la génération d'au moins une phrase de sortie en fonction de l'au moins un mot de sortie par le modèle de langage.

3. Procédé selon l'une des revendications précédentes, dans lequel la fourniture de l'ensemble de pseudo-mots comprend

- la fourniture de l'ensemble de mots réels,
- la détermination de l'ensemble de pseudo-mots en fonction de l'ensemble de mots réels, dans lequel l'ensemble de pseudo-mots est plus petit que l'ensemble de mots réels.

4. Procédé selon l'une des revendications précédentes, dans lequel chaque mot réel de l'ensemble de mots réels n'est égal à aucun des pseudo-mots de l'ensemble de pseudo-mots.

5. Procédé selon la revendication 2 ou l'une des revendications 3 ou 4 dans la mesure où elles dépendent au moins indirectement de la revendication 2, dans lequel

- le modèle de langage dépend d'une grammaire,
- la grammaire dépend de l'ensemble de pseudo-mots et de l'ensemble de mots de commande, et
- au moins certains des pseudo-mots de l'ensemble de pseudo-mots compris dans la grammaire ont un poids supérieur à celui d'un quelconque mot parmi les mots de commande de l'ensemble de mots de commande.

6. Procédé selon l'une des revendications précédentes, dans lequel l'ensemble de pseudo-mots est déterminé par un procédé statistique comprenant

- la transcription de l'ensemble de mots réels en phonèmes,
- la sélection de certains phonèmes de l'ensemble de mots réels, et
- la détermination de l'ensemble de pseudo-mots en fonction de la sélection.

7. Procédé selon l'une des revendications précédentes, dans lequel la commande est rejetée si l'au moins un mot de sortie est l'un des pseudo-mots de l'ensemble de pseudo-mots.

8. Dispositif de détermination d'une commande, dans lequel le dispositif est configuré pour mettre en œuvre le procédé selon l'une des revendications précédentes.

9. Programme informatique comprenant des instructions qui, lorsque le programme informatique est exécuté par un ordinateur, amènent le programme informatique à exécuter le procédé selon l'une des revendications 1 à 7.

10. Support d'information lisible par ordinateur sur lequel est stocké le programme informatique selon la revendication 9.

Fig 1

Fig 2

| S5 | |

...          ...
barrel      B AE R AH L
battle      B AE T AH L
bottle      B AA T AH L
bullet      B UH L AH T
button      B AH T AH N
relate      R IH L EY T
retain      R IH T EY N
return      R IH T ER N
rural       R UH R AH L
senior      S IY N Y ER
settle      S EH T AH L
silver      S IH L V ER
...          ...

S6

S7

S8

S9

S10

S11

S12

S13

S14

S15

S16    S17

## Fig 3

| 1 | 2 | 3 | 4 | 5 |
|---|---|---|---|---|
| C | V | C | V | C |
| V | C | C | V | C |
| C | V | C | C | C |
| C | C | V | C | C |
| C | C | C | V | C |
| C | V | C | C | V |

U

## Fig 4

|      | 1  | 2  | 3  | 4  | 5  |
|------|----|----|----|----|----|
| B    | **33** | 4  | 8  | 4  | 0  |
| T    | 17 | 20 | 35 | **23** | **74** |
| Z    | 0  | 1  | 13 | 1  | 12 |
| R    | **35** | **34** | **45** | 12 | 8  |
| S    | **66** | 6  | 28 | 11 | 32 |
| N    | 14 | **24** | **40** | **32** | **57** |
| D    | 30 | 9  | 16 | 10 | 32 |
| L    | 17 | 13 | **40** | **26** | 50 |
| ER   | 2  | **25** | 5  | 17 | **63** |
| TH   | 3  | 3  | 4  | 2  | 2  |

# Fig 5

|    | 1   | 2  | 3  | 4   | 5  |
|----|-----|----|----|-----|----|
| AW | 2   | 5  | 5  | 2   | 1  |
| AH | **36** | 31 | **20** | **126** | 3  |
| UW | 0   | 5  | 6  | 6   | **5** |
| IH | **18** | **71** | 6  | **55** | 0  |
| OW | 1   | 12 | 4  | 7   | **5** |
| EH | **13** | **37** | **19** | 11  | 0  |
| IY | 4   | 26 | 6  | **34** | **44** |
| AA | 4   | 20 | 9  | 0   | 0  |
| AE | 12  | **32** | **12** | 1   | 0  |
| AY | 1   | 17 | 4  | 24  | 4  |

Fig 6

| 1 | 2 | 3 | 4 | 5 |
|---|---|---|---|---|
| AH | IH | AH | AH | IY |
| IH | EH | EH | IH | OW |
| EH | AE | AE | IY | OW |
|  | ⇧ |  | ⇧ |  |
| C | V | C | V | C |
| ⇩ |  | ⇩ |  | ⇩ |
| S | R | R | N | T |
| R | ER | L | L | ER |
| B | N | N | T | N |

Fig 7

| j=0 | S | IH | R | AH | T |
|---|---|---|---|---|---|
| j=1 | R | EH | L | IH | ER |
| j=2 | B | AE | N | IY | N |
| j=0 | AH | R | R | AH | T |
| j=1 | IH | ER | L | IH | ER |
| j=2 | EH | N | N | IY | N |

**EP 4 292 083 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009112593 A1
- US 6016470 A
- US 2001053974 A1
- US 2004054533 A1